(19) Europäisches Patentamt
European Patent Office
Office européen des brevets

(11) Publication number: **0 195 675**
**B1**

(12) # EUROPEAN PATENT SPECIFICATION

(45) Date of publication of patent specification: **09.08.89**

(51) Int. Cl.$^4$: **G 11 B 5/71**

(21) Application number: **86302059.0**

(22) Date of filing: **20.03.86**

(54) **Magnetic recording medium.**

(30) Priority: **20.03.85 JP 56554/85**
**20.03.85 JP 56558/85**
**16.12.85 JP 282354/85**
**16.12.85 JP 282355/85**

(43) Date of publication of application: **24.09.86 Bulletin 86/39**

(45) Publication of the grant of the patent: **09.08.89 Bulletin 89/32**

(84) Designated contracting states: **DE FR GB NL**

(56) References cited:
DE-A- 3 100 684
DE-A- 3 302 911

(73) Proprietor: **Kao Corporation**
**14-10, Nihonbashi Kayabacho 1-chome**
**Chuo-Ku Tokyo 103 (JP)**

(72) Inventor: **Kanai, Hiroyuki**
**4065-4 Kamitaki Hiraidecho**
**Utsunomiya-shi Tochigi (JP)**
Inventor: **Imamura, Tetsuya**
**34-18 Higashiyukigaya 2-chome**
**Ohta-ku Tokyo (JP)**
Inventor: **Takeuchi, Takashi**
**4334-85 Hiraidecho**
**Utsunomiya-shi Tochigi (JP)**
Inventor: **Suzue, Shigetoshi**
**997-5 Narukami**
**Wakayama-shi Wakayama (JP)**

(74) Representative: **Bannerman, David Gardner et al**
**Withers & Rogers 4 Dyer's Buildings Holborn**
**London, EC1N 2JT (GB)**

**EP 0 195 675 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a magnetic recording medium having an unexpectedly-improved durability.

A magnetic recording medium is usually prepared by applying a magnetic paint comprising a magnetic powder, a binder resin, an organic solvent and other necessary components to a substrate such as a polyester film. For magnetic recording media, a high wear resistance and excellent durability are required of a magnetic layer of a floppy disc, since the magnetic layer wears off easily because it is strongly rubbed against a magnetic head or jacket liner during the recording and reproducing processes.

A known process for improving the wear resistance of the magnetic layer comprises incorporation of various lubricants in the magnetic layer.

Hitherto the lubricants used have included for example, fatty acids, oleyl oleate, stearic acid butoxide, fatty acid amides, liquid paraffin and waxes. However, the performance of these lubricants is unsatisfactory. For example, oleyl oleate and stearic acid butoxide do not sufficiently improve the durability of the medium ; and though fatty acids such as stearic or oleic acid and hydrocarbon lubricants such as liquid paraffin are effective in improving the durability of recording media, their compatibility with binders is poor and, therefore, when they are used in large quantities, they tend to bleed from the surface of the magnetic layer, staining the recording head unfavourably.

One known magnetic recording medium, which is disclosed in DE 3100684 includes a lubricant which contains a ester of a $C_{14}$ to $C_{18}$ fatty acid and an alcohol of the formula

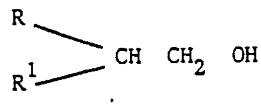

wherein R and $R^1$ are independently $C_5$ to $C_{10}$ alkyl groups.

After intensive investigations made for the purpose of developing a magnetic recording medium having an excellent lubricity which exhibits a remarkably improved durability under various conditions of use, the inventors have made the present invention.

According to this invention we provide a magnetic recording medium which comprises a magnetic powder, and a resin binder characterised in that it further comprises an ester compound of the formula (1) :

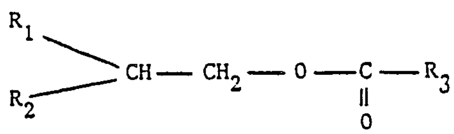

in which $R_1$ and $R_2$ are each a straight chain or branched chain $C_1$ to $C_{25}$ saturated alkyl and $R_3$ is an unsaturated hydrocarbon group or a straight-chain or branched-chain saturated alkyl and has 7 to 27 carbon atoms, provided that the total carbon atom number of $R_1$ and $R_2$ ranges from $C_{18}$ to $C_{26}$ when $R_3$ is the unsaturated hydrocarbon group or from $C_{15}$ to $C_{27}$ when $R_3$ is the straight-chain or branched-chain saturated alkyl.

The invention provides two types of embodiment, one where $R_3$ is an unsaturated group and the other where $R_3$ is a saturated group. It is preferred that the total carbon atoms of $R_1$ and $R_2$ ranges from 18 to 26 when $R_3$ is an unsaturated hydrocarbon group having 15 to 27 carbon atoms and then the total carbon atoms of $R_1$ and $R_2$ ranges from 22 to 26 when $R_3$ is a straight-chained or branched-chain saturated alkyl.

The invention also provides a magnetic recording material comprising a substrate and a recording medium as defined above.

The invention provides the magnetic recording medium with an improved lubricity and eventually an improved durability.

The first type of embodiment is prepared as shown below.

The ester compounds of the present invention represented by the above general formula (1) are specified compounds. More particularly, they comprise a portion derived from an alcohol, i. e. a branched-chain alcohol having 20 to 34 carbon atoms and a portion derived from a fatty acid, i. e. an unsaturated monobasic fatty acid having 8 to 28 carbon atoms. The reason why the lubricity of the magnetic recording medium is improved remarkably by using the above-specified ester compound as the lubricant has not been elucidated yet.

According to the inventors' investigations, the most suitable lubricants are esters as they have a good compatibility with the binder and those having a relatively high molecular weight are highly effective in improving the lubricity. However, many ordinary esters with a high molecular weight have a high melting point and, therefore, though their lubricity is good in a relatively high temperature region, their fluidity and penetrability are poor at a low temperature of, for example, 5 °C and they cannot impart an excellent durability to the medium at such a low temperature. From these facts it is supposed that the melting point of the ester compound used in the present invention is lowered by a synergistic effect of the branched alcohol and the unsaturated fatty acid to achieve an excellent lubricity of the magnetic recording medium and to improve the durability.

The ester compound contained in the magnetic recording medium of the present invention can be obtained by esterifying a branched-chain alcohol having 20 to 34 carbon atoms with an unsaturated fatty acid having 8 to 28 carbon atoms. The branched-chain alcohol to use as a starting material for the ester compound of the invention may be obtained, for example, by the Guerbet reaction. The unsaturated fatty acid to use for the same purpose, for example, includes decylenic acid, undecylenic acid, physeteric acid, palmitoleic acid, oleic acid, linolic acid, linolenic acid, arachidonic acid, erucic acid and nervonic acid.

The second type of embodiment is prepared as shown below.

The ester compounds of the present invention represented by the above general formula (1) are strictly specified compounds. More particularly, they comprise a portion derived from an alchohol, i. e. a branched-chain alcohol having 24 to 34 carbon atoms and a portion derived from a fatty acid, i. e. a monobasic fatty acid having 8 to 28 carbon atoms. The reason why the durability of the magnetic recording medium is improved remarkably by using the above-specified ester compound as the lubricant has not been elucidated yet.

The ester compound contained in the magnetic recording medium of the present invention can be obtained by esterifying a branched-chain alcohol having 24 to 34 carbon atoms with a monobasic fatty acid having 8 to 28 carbon atoms. The branched-chain alcohols used herein are those produced by the Guerbet reaction and called Guerbet alcohols.

Among these ester compounds, those having 30 carbon atoms in total are preferred.

The ester compounds of the present invention may be either directly incorporated in a magnetic paint or temporarily dissolved in a suitable solvent and then sprayed on a magnetic coating film. An ordinary lubricant may further be used in combination with the ester compound of the present invention.

Examples of the magnetic powder according to the present invention include very fine, acicular metal oxides such as $\gamma$-$Fe_2O_3$ ; $Fe_3O_4$ and $CrO_2$, processed $\gamma$-$Fe_2O_3$ such as Co-coated $\gamma$-$Fe_2O_3$ and Co-doped $\gamma$-$Fe_2O_3$, metallic iron powder, very fine, platy barium ferrite in which the Fe atom may be partially replaced with one or more of Ti, Co, Zn, V and Nb and ultra-fine powders of metals and alloys such as Co, Fe-Co and Fe-Ni. Among them, the metallic iron powder has a quite poor chemical stability and, therefore, it may be surface-treated or a small amount of nickel, cobalt, titanium, silicon or aluminum may be added thereto in the form of the metal atom or a salt or oxide thereof. Further, the metallic iron powder having a thin oxide film on the surface thereof formed in a weakly oxidizing atmosphere for stabilizing the same may also be used.

Examples of the binders usable in the present invention include polyurethane, polyester, polyvinyl chloride, vinyl chloride/vinyl acetate copolymer, polyacrylonitrile, nitrile rubber, epoxy resin, alkyd resin, polyamide, polyacrylate, polymethacrylate, polyvinyl acetate, polyvinyl butyral, polyvinylidene chloride, vinylidene chloride copolymer, nitrocellulose, maleic acid-modified vinyl chloride/vinyl acetate copolymer and ethylcellulose. Though they may be used alone, they are used usually in the form of a mixture of two or more of them. A plasticizer or hardening agent may be added to the resin to control its hardness.

The amount of the binder is generally 15 to 60 parts by weight for 100 parts by weight of the magnetic powder. When the amount of the binder is less than 15 parts by weight, the obtained magnetic coating film has a poor strength and its adhesion to the base is insufficient. On the contrary, when an amount of the binder is larger than 60 parts by weight, the concentration of the magnetic powder in the magnetic coating film is insufficient and the reproduction power is reduced disadvantageously. Further, in such a case, the properties of the coating film are often deteriorated.

The ester compound of the above general formula (1) is used in an amount of usually 1 to 15 wt. % based on the magnetic powder.

## Examples

The following examples will further illustrate the present invention, and by no means limit the invention.

### Examples 1 to 11

A mixture having the following composition was prepared using a lubricant shown in Table 1 :

| | |
|---|---|
| Co-coated $\gamma$-$Fe_2O_3$ | 100 parts by weight |
| vinyl chloride/vinyl acetate copolymer *1 | 30 parts by weight |
| nitrile/butadiene rubber *2 | 15 parts by weight |
| carbon black | 7 parts by weight |
| aluminum oxide | 6 parts by weight |
| toluene | 150 parts by weight |
| methyl ethyl ketone | 150 parts by weight |
| lecithin | 1 part by weight |
| lubricant | 6 parts by weight |

Notes) *1 trade name : VAGH (a product of U.C.C., U.S.A.)
*2 trade name : 1 432 J (a product of Nippon zeon Co., Ltd.).

Then, the mixture was kneaded in a sand mill for 15 h. 7 parts by weight of a polyisocyanate compound (Coronate L ; a product of Nippon Polyurethane Co., Ltd.) was added thereto to obtain 11 kinds of magnetic paints. Each of the paints was applied to a polyethylene tetraphthalate film having a thickness of 75 µm so that the thickness of the coating layer afterdrying would be 1.5 µm. After drying, it was calendered. After leaving it to stand at 60 °C for 4 days for curing, discs were cut out and their surfaces were polished to form magnetic discs.

Each of these discs was placed in an accelerated durability test drive and the running time required until the reproduction output was reduced to 70 % based on the initial output was measured at 5 °C to examine durability. Results are shown in Table 1.

Table 1

| Example | Lubricant | Durability at 5°C (h) |
|---|---|---|
| 1 | 2-decyltridecyl oleate | 130 |
| 2 | 2-octyldodecyl oleate | 100 |
| 3 | 2-octyldodecyl erucate | 85 |
| 4 | 2-decyltridecyl linolate | 80 |
| 5 | 2-decyltetradecyl oleate | 140 |
| 6 | 2-tetradecyloctadecyl oleate | 135 |
| 7 | 2-dodecyltetradecyl erucate | 130 |
| 8 | 2-decyltetradecyl linolate | 110 |
| 9 | 2-tetradecyloctadecyl undecylenate | 90 |
| 10 | 2-decylhexadecyl undecylenate | 85 |
| 11 | 2-octyldodecyl nervonate | 85 |

Comparative Examples 1 to 6

Six kinds of magnetic paints were prepared using the same amounts of the same components as in Example 1 except that the lubricant was replaced with 6 parts by weight of a lubricant shown in Table 2 in the same manner as above. Magnetic discs were prepared by using these paints in the same manner as in Example 1 and the durabilities of the obtained discs were examined to obtain the results shown in Table 2.

Table 2

| Comp. Ex. | Lubricant | Durability at 5°C (h) |
|---|---|---|
| 1 | oleyl oleate | 30 |
| 2 | 2-hexyldecyl stearate | 45 |
| 3 | butoxyethyl stearate | 30 |
| 4 | 2-ethylhexyl stearate | 40 |
| 5 | 2-octyldecyl stearate | 45 |
| 6 | tridecyl stearate / isocetyl stearate (3/3) | 40 |

Examples 12 to 22

A mixture having the following composition was prepared using a lubricant shown in Table 3.

| | |
|---|---|
| Co-coated $\gamma$-$Fe_2O_3$ | 100 parts by weight |
| vinyl chloride/vinyl acetate copolymer *1 | 30 parts by weight |
| nitrile/butadiene rubber *2 | 15 parts by weight |
| carbon black | 7 parts by weight |
| aluminium oxide | 6 parts by weight |
| toluene | 150 parts by weight |
| methyl ethyl ketone | 150 parts by weight |
| lecithin | 1 parts by weight |
| lubricant | 6 parts by weight |

Notes) *1 trade name : VAGH (a product of U.C.C., U.S.A.)
*2 trade name : 1 432 J (a product of Nippon Zeon Co., Ltd.)

Then, the mixture was kneaded in a sand mill for 15 hours. Seven parts by weight of a polyisocyanate compound, Coronate, a tradename of Nippon Polyurethane Co., Ltd., was added thereto to obtain 11 magnetic paints. Each of them was applied to a polyethylene terephthalate film having a thickness of 75 µm so that the thickness of the coating layer after drying would be 1.5 µm. After drying, it was calendered. After leaving it to stand at 60 °C for 4 days for curing, discs were cut out and their surfaces were polished to form magnetic discs.

Each of these discs was placed in an accelereted durability test drive and the running time required until the reproduction output was reduced to 70 % based on the initial output was measured at 5 °C and 25 °C, respectively, to examine durability. Results are shown in Table 3.

Table 3

| Example | Lubricant | Durability (h) at | |
|---|---|---|---|
| | | 5°C | 25°C |
| 12 | 2-decyltetradecyl caprylate | 65 | 405 |
| 13 | 2-dodecyltetradecyl laurate | 75 | 425 |
| 14 | 2-decyltetradecyl palmitate | 70 | 450 |
| 15 | 2-decyltetradecyl isomyristate | 80 | 460 |
| 16 | 2-decyltetradecyl stearate | 85 | 475 |
| 17 | 2-decyltetradecyl behenate | 85 | 455 |
| 18 | 2-hexadecyloctadecyl caprylate | 70 | 415 |
| 19 | 2-tetradecyloctadecyl palmitate | 75 | 440 |
| 20 | 2-dodecyloctadecyl stearate | 85 | 480 |
| 21 | 2-dodecyloctadecyl behenate | 80 | 480 |
| 22 | 2-dodecyloctadecyl cerotate | 70 | 425 |

Comparative examples 7 to 11

Five magnetic paints were prepared in the same way as shown in example 12, except that 6 parts by weight of the lubricants shown in Table 4, respectively, were used instead. Then five magnetic discs were produced from the paints, respectively, and were examined in view of durability. Results are shown in Table 4.

Table 4

| Comp. Ex. | Lubricant | Durability (h) at 5°C | Durability (h) at 25°C |
|---|---|---|---|
| 7 | 2-hexyldecyl stearate | 45 | 155 |
| 8 | oleyl oleate | 30 | 135 |
| 9 | butoxyethyl stearate | 30 | 125 |
| 10 | 2-ethylhexyl stearate | 40 | 130 |
| 11 | tridecyl stearate / isocetyl stearate (3/3) | 40 | 140 |

## Claims

1. A magnetic recording medium which comprises a magnetic powder, and a resin binder characteristed in that it further comprises an ester compound of the formula (1) :

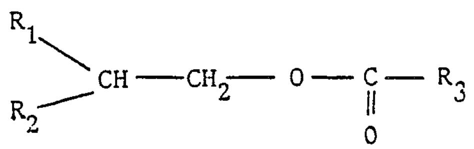

(1)

in which $R_1$ and $R_2$ are each a straight chain or branched chain $C_1$ to $C_{25}$ saturated alkyl and $R_3$ is an unsaturated hydrocarbon group or a straight-chain or branched-chain saturated alkyl and has 7 to 27 carbon atoms, provided that the total carbon atom number of $R_1$ and $R_2$ ranges from $C_{18}$ to $C_{32}$ when $R_3$ is the unsaturated hydrocarbon group or from $C_{22}$ to $C_{32}$ when $R_3$ is the straight-chain or branched-chain saturated alkyl.

2. A magnetic recording medium according to Claim 1, characterised in that the total number of carbon atoms of $R_1$ and $R_2$ ranges from $C_{18}$ to $C_{26}$ and $R_3$ is a $C_{15}$ to $C_{27}$ unsaturated hydrocarbon group.

3. A magnetic recording medium according to Claim 1, characterised in that the total number of carbon atoms of $R_1$ and $R_2$ ranges from $C_{22}$ to $C_{26}$ and $R_3$ is a straight-chain or branched-chain saturated alkyl.

4. A magnetic recording medium according to Claim 1, characterised in that the ester compound is derived from a $C_{20}$ to $C_{34}$ branched-chain alcohol and a $C_8$ to $C_{28}$ unsaturated monobasic fatty acid.

5. A magnetic recording medium according to Claim 1, characterised in that the ester compound is derived from $C_{24}$ to $C_{34}$ branched-chain alcohol and a $C_8$ to $C_{28}$ monobasic fatty acid.

6. A magnetic recording medium according to any one of the preceding claims, characterised in that it comprises 100 parts by weight of the magnetic powder, 15 to 60 parts by weight of the resin binder and 1 to 15 per cent by weight, based on the magnetic powder, of the ester compound.

7. A magnetic recording material comprising a substrate and a magnetic recording medium according to any preceding claim.

## Patentansprüche

1. Magnetischer Aufzeichnungsträger, der ein magnetisches Pulver und ein Harzbindemittel umfaßt, dadurch gekennzeichnet, daß er außerdem umfaßt eine Esterverbindung der Formel (1) :

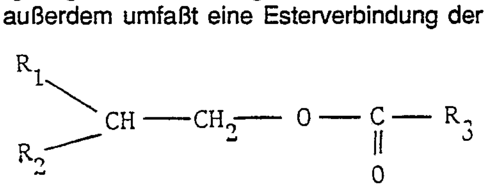

(1)

worin bedeuten : $R_1$ und $R_2$ jeweils eine geradkettige oder verzweigtkettige gesättigte $C_1$-$C_{25}$-Alkylgruppe und $R_3$ eine ungesättigte Kohlenwasserstoffgruppe oder eine geradkettige oder verzweigtkettige

gesättigte Alkylgruppe mit 7 bis 27 Kohlenstoffatomen, mit der Maßgabe, daß die Gesamtanzahl der Kohlenstoffatome von $R_1$ und $R_2$ in dem Bereich von $C_{18}$ bis $C_{32}$ liegt, wenn $R_3$ eine ungesättigte Kohlenwasserstoffgruppe darstellt, oder in dem Bereich von $C_{22}$ bis $C_{32}$ liegt, wenn $R_3$ eine geradkettige oder verzweigtkettige gesättigte Alkylgruppe darstellt.

2. Magnetischer Aufzeichnungsträger nach Anspruch 1, dadurch gekennzeichnet, daß die Gesamtanzahl der Kohlenstoffatome von $R_1$ und $R_2$ in dem Bereich von $C_{18}$ bis $C_{26}$ liegt und $R_3$ eine ungesättigte $C_{15}$-$C_{27}$-Kohlenwasserstoffgruppe bedeutet.

3. Magnetischer Aufzeichnungsträger nach Anspruch 1, dadurch gekennzeichnet, daß die Gesamtanzahl der Kohlenstoffatome von $R_1$ und $R_2$ in dem Bereich von $C_{22}$ bis $C_{26}$ liegt und $R_3$ eine geradkettige oder verzweigtkettige gesättigte Alkylgruppe bedeutet.

4. Magnetischer Aufzeichnungsträger nach Anspruch 1, dadurch gekennzeichnet, daß die Esterverbindung abgeleitet ist von einem verzweigtkettigen $C_{20}$-$C_{34}$-Alkohol und einer ungesättigten monobasischen $C_8$-$C_{28}$-Fettsäure.

5. Magnetischer Aufzeichnungsträger nach Anspruch 1, dadurch gekennzeichnet, daß die Esterverbindung abgeleitet ist von einem verzweigtkettigen $C_{24}$-$C_{34}$-Alkohol und einer monobasischen $C_8$-$C_{28}$-Fettsäure.

6. Magnetischer Aufzeichnungsträger nach einem der vorhergehenden Ansprüche, dadurch gekennzeichnet, daß er umfaßt 100 Gew.-Teile des magnetischen Pulvers, 15 bis 60 Gew.-Teile des Harzbindemittels und 1 bis 15 Gew.-Teile, bezogen auf das magnetische Pulver, der Esterverbindung.

7. Magnetisches Aufzeichnungsmaterial, das umfaßt ein Substrat und einen magnetischen Aufzeichnungsträger nach einem der vorhergehenden Ansprüche.

## Revendications

1. Milieu d'enregistrement magnétique, qui comprend une poudre magnétique et un liant résineux, caractérisé en ce qu'il comprend de plus un ester de formule (1) :

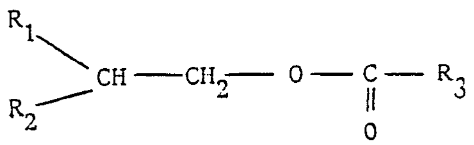

(1)

dans laquelle $R_1$ et $R_2$ sont chacun un alkyle en $C_1$ à $C_{25}$ à chaîne droite ou à chaîne ramifiée et $R_3$ est un groupe hydrocarboné insaturé ou un alkyle saturé à chaîne droite ou à chaîne ramifiée et a 7 à 27 atomes de carbone, sous réserve que le nombre total des atomes de carbone de $R_1$ et $R_2$ soit dans l'intervalle de $C_{18}$ à $C_{32}$ lorsque $R_3$ est le groupe hydrocarboné insaturé et de $C_{22}$ à $C_{32}$ lorsque $R_3$ est l'alkyle saturé à chaîne droite ou à chaîne ramifiée.

2. Milieu d'enregistrement magnétique selon la revendication 1, caractérisé en ce que le nombre total des atomes de carbone de $R_1$ et $R_2$ se situe dans l'intervalle de $C_{18}$ à $C_{26}$ et $R_3$ est un groupe hydrocarboné insaturé en $C_{15}$ à $C_{27}$.

3. Milieu d'enregistrement magnétique selon la revendication 1, caractérisé en ce que le nombre total des atomes de carbone de $R_1$ et $R_2$ se situe dans l'intervalle de $C_{22}$ à $C_{26}$ et $R_3$ est un alkyle saturé à chaîne droite ou à chaîne ramifiée.

4. Milieu d'enregistrement magnétique selon la revendication 1, caractérisé en ce que l'ester dérive d'un alcool à chaîne ramifiée en $C_{20}$ à $C_{34}$ et d'un mono-acide gras insaturé en $C_8$ à $C_{28}$.

5. Milieu d'enregistrement magnétique selon la revendication 1, caractérisé en ce que l'ester dérive d'un alcool à chaîne ramifiée en $C_{24}$ à $C_{34}$ et d'un mono-acide gras en $C_8$ à $C_{28}$.

6. Milieu d'enregistrement magnétique selon l'une quelconque des revendications précédentes, caractérisé en ce qu'il comprend 100 parties en poids de la poudre magnétique, 15 à 60 parties en poids du liant résineux et de 1 à 15 % en poids de l'ester, relativement à la poudre magnétique.

7. Matériel d'enregistrement magnétique comprenant un substrat et un milieu d'enregistrement magnétique selon l'une quelconque des revendications précédentes.